# EUROPÄISCHE PATENTSCHRIFT

(11) **EP 3 265 738 B1**
(45) Veröffentlichungstag und Bekanntmachung des Hinweises auf die Patenterteilung: **12.12.2018**
(21) Anmeldenummer: 16701799.5
(22) Anmeldetag: 28.01.2016
(51) Int. Cl.: F28F 1/02, B22F 3/00, B29C 67/00

(54) **WÄRMETAUSCHER, INSBESONDERE FÜR EIN KRAFTFAHRZEUG**
HEAT EXCHANGER, IN PARTICULAR FOR A MOTOR VEHICLE
ÉCHANGEUR DE CHALEUR, EN PARTICULIER POUR VÉHICULE AUTOMOBILE

(30) Priorität: 05.03.2015 DE 102015204015
(43) Veröffentlichungstag der Anmeldung: 10.01.2018
(73) Patentinhaber: MAHLE International GmbH, 70376 Stuttgart (DE)
(72) Erfinder: ALTUNKAYA, Yavuz, 70619 Stuttgart (DE); FETZER, Tobias, 73760 Ostfildern (DE); GRAUER, Wilhelm, 70839 Gerlingen (DE); KERLER, Boris, 70192 Stuttgart (DE); KÜHNDEL, Jonas, 70197 Stuttgart (DE); RENZ, Marco, 73732 Esslingen (DE); VELTE, Volker, 75443 Ötisheim (DE)
(74) Vertreter: BRP Renaud & Partner mbB Rechtsanwälte Patentanwälte Steuerberater
(86) Internationale Anmeldenummer: PCT/EP2016/051804
(87) Internationale Veröffentlichungsnummer: WO 2016/139019

(56) Entgegenhaltungen:
- EP-A1- 2 781 872
- EP-A1- 2 811 249
- EP-A2- 2 636 982
- WO-A1-2013/163398
- WO-A2-2011/115883

## Beschreibung

Die vorliegende Erfindung betrifft einen Wärmetauscher nach dem Oberbegriff des Anspruchs 1, insbesondere für ein Kraftfahrzeug, sowie ein Kraftfahrzeug mit einem solchen Wärmetauscher. Solch ein Wärmetauscher ist bekannt aus EP 2 811 249 A1. Als Wärmetauscher oder Wärmeübertrager wird gemeinhin eine Vorrichtung bezeichnet, die Wärme von einem Stoffstrom auf einen anderen Stoffstrom überträgt. Wärmetauscher kommen beispielsweise in Kraftfahrzeugen zum Einsatz, um in einer mit der Brennkraftmaschine des Kraftfahrzeugs zusammenwirkenden Frischluftanlage die mittels eines Abgasturboladers aufgeladene Frischluft zu kühlen. Hierzu wird die zu kühlende Frischluft in den Wärmetauscher eingeleitet, wo sie thermisch mit einem ebenfalls in den Wärmetauscher eingebrachten Kühlmittel wechselwirkt und auf diese Weise Wärme an das Kühlmittel abgeben kann.
Ein derartiger Wärmetauscher kann beispielsweise als Plattenwärmetauscher ausgestaltet sein und mehrere Plattenpaare aufweisen, die typischerweise in einer Stapelrichtung aufeinander gestapelt sind, wobei zwischen den Platten eines Plattenpaars ein Kühlmittelpfad ausgebildet wird, durch den ein Kühlmittel geführt wird. In einem zwischen zwei benachbarten Plattenpaaren ausgebildeten Zwischenraum kann fluidisch getrennt zum Kühlmittel das zu kühlende Medium, etwa die in einem Abgasturbolader aufgeladene Ladeluft, geführt werden, so dass das Kühlmittel durch die Platten der Plattenpaare hindurch in thermische Wechselwirkung mit der zu kühlenden Frischluft gesetzt werden kann. Zur Verbesserung des Wärmeaustauschs können zwischen benachbarten Plattenpaaren zusätzlich Rippenstrukturen vorgesehen werden, welche die für die thermische Wechselwirkung zur Verfügung stehende Wechselwirkungsfläche der Platten erhöhen. Derartige Konstruktionen sind dem Fachmann als sog. "Rippe-Rohr-Wärmetauscher" bekannt.

Es ist eine Aufgabe der vorliegenden Erfindung, bei der Entwicklung von Wärmetauschern, insbesondere für Kraftfahrzeuge, neue Wege aufzuzeigen.

Diese Aufgabe wird durch einen Wärmetauscher gemäß dem unabhängigen Patentanspruch 1 gelöst. Bevorzugte Ausführungsformen sind Gegenstand der abhängigen Patentansprüche.

Grundgedanke der Erfindung ist demnach, die verschiedenen im Wärmetauscher definierten ersten und zweiten Fluidpfade, die zum Durchströmen mit einem ersten bzw. zweiten Fluid dienen, mittels geeigneter Rohrkörpern zu begrenzen, wobei der Rohrquerschnitt wenigstens eines Rohrkörpers entlang einer Erstreckungsrichtung des Rohrkörpers wenigstens abschnittsweise zu- und/oder abnimmt. Vom erfindungsgemäßen Gedanken umfasst sind also auch Ausführungsformen mit einer abschnittsweisen Zunahme und einer abschnittsweisen Abnahme entlang der Erstreckungsrichtung. Bevorzugt gilt dies für eine Mehrzahl von Rohrkörpern, d.h. für wenigstens zwei Rohrkörper, besonders bevorzugt für alle einen ersten oder zweiten Fluidkanal begrenzenden Rohrkörper. Auf diese Weise kann der Rohrquerschnitt der Rohrkörper an die lokalen Strömungsbedingungen der durch die Rohrkörper strömenden Fluide - das erste Fluid kann beispielsweise ein Kühlmittel, das zweite Fluid ein mit Hilfe des Kühlmittels zu kühlendes Gas sein - angepasst werden.

Prinzipiell gilt bei solchen Wärmetauschern, dass die Volumendichte des Gases beim Abkühlen durch Wärmeaustausch mit dem Kühlmittel kontinuierlich zunimmt. In einem Rohrkörper mit konstantem Rohrquerschnitt führt dies dazu, dass der Volumenstrom und somit die Geschwindigkeit des den Rohrkörper durchströmenden Gases abnimmt. Dies bedeutet aber eine unerwünschte Verringerung der Effizienz des Wärmetauschers. Durch die erfindungsgemäße Änderung des Rohrquerschnitts entlang der Erstreckungsrichtung, vorzugsweise derart, dass sich der Rohrquerschnitt entlang der Erstreckungsrichtung und entlang einer Hauptströmungsrichtung des Gases wenigstens abschnittsweise ändert, wird erreicht, dass die Geschwindigkeit des durch den Rohrkörper strömenden Gases im Wesentlichen konstant bleibt. Eine unerwünschte Abnahme der Gasgeschwindigkeit und, damit verbunden, ein eine unerwünschte Reduzierung des Wärmeübergangskoeffizienten kann auf diese Weise weitgehend oder sogar vollständig ausgeschlossen werden. Dies führt im Ergebnis zu einer verbesserten Effizienz des Wärmetauschers.

Zur Realisierung von Rohrkörpern mit entlang der Erstreckungsrichtung variierendem Rohrquerschnitt sind die Rohrkörper erfindungsgemäß mittels eines additiven Herstellungsverfahrens hergestellt. Vom dem Begriff "additives Herstellungsverfahren" sind dabei erfindungsgemäß alle Herstellungsverfahren umfasst, welche das Bauteil unmittelbar aus einem Computermodell heraus schichtweise aufbauen. Derartige Herstellungsverfahren sind auch unter der Bezeichnung "Rapid Forming" bekannt. Unter dem Begriff "Rapid Forming" sind dabei insbesondere Produktionsverfahren zur schnellen und flexiblen Herstellung von Bauteilen mittels werkzeugloser Fertigung direkt aus CAD-Daten gefasst. Die Verwendung eines additiven Herstellungsverfahrens ermöglicht auf einfache und flexible Weise die Herstellung der Rohrkörper des Wärmetauschers mit variierenden Rohrquerschnitten. Dies gilt für Rohrkörper mit nahezu beliebiger Geometrie. Insbesondere gilt dies für als Flachrohre ausgebildete Rohrkörper, wie sie typischerweise in Plattenwärmetauscher verwendet werden, und für als Rundrohre ausgebildete Rohrkörper, die durch Verwendung eines additiven Herstellungsverfahrens problemlos gefertigt werden können.

Zur Herstellung eines Wärmetauschers mit möglichst hoher Effizienz ist es denkbar, den zur Erzielung einer maximalen Wärmetauscher-Effizienz optimalen Rohrquerschnitt der Rohrkörper entlang der Erstreckungsrichtung mittels geeigneter Simulationsrechnungen zu ermitteln. Die erfindungswesentliche Verwendung eines additiven Herstellungsverfahrens erlaubt es, die gewünschten Rohrkörper mit variablem Rohrquerschnitt direkt als CAD-Modell zu definieren und aus einem solchen CAD-Modell heraus direkt zu fertigen. Dies erlaubt die einfache Fertigung von Rohrkörpern nicht nur mit variierendem Rohrquerschnitt, sondern nahezu beliebiger Querschnittgeometrie.

Bevorzugt kann das additive Herstellungsverfahren Laserschmelzen umfassen. Dies bedeutet, dass zum Herstellen des Wärmetauschers ein Laserschmelzverfahren verwendet wird. Mittels eines solchen Verfahrens können die Rohrkörper des Wärmetauschers direkt aus 3D-CAD-Daten hergestellt werden. Grundsätzlich werden die Rohrkörper des Wärmetauschers beim Laserschmelzen werkzeuglos und schichtweise auf Basis des dem Wärmetauscher zugeordneten dreidimensionalen CAD-Modells gefertigt.

oder zusätzlich kann der Wärmetauscher einstückig ausgebildet sein. Eine solche, einstückige Ausbildung bildet sich insbesondere bei Verwendung des vorangehend vorgestellten additiven Herstellungsverfahrens, insbesondere des Laserschmelzens, an. Bei einer einstückigen Ausbildung des Wärmetauschers entfällt das sehr aufwändige und somit kostenintensive Befestigen der einzelnen Komponenten des Wärmetauschers aneinander.

In einer weiteren bevorzugten Ausführungsform sind benachbarte Rohrkörper, vorzugsweise alle Rohrkörper, integral aneinander ausgeformt. Das heißt, die betreffenden Rohrkörper weisen einen gemeinsamen Kontaktabschnitt auf. Rohrkörper mit einer solchen Eigenschaft lassen sich im Zuge des erfindungsgemäßen additiven Herstellungsverfahrens besonders einfach herstellen. Besonders bevorzugt sind daher alle Rohrkörper integral aneinander ausgeformt.

In einer weiteren bevorzugten Ausführungsform erstrecken sich die Rohrkörper in der Erstreckungsrichtung jeweils über eine Rohrlänge hinweg. In dieser Ausführungsform nimmt der Rohrquerschnitt wenigstens eines Rohrkörpers, vorzugsweise aller Rohrkörper, kontinuierlich über die gesamte Rohrlänge hinweg zu- oder ab. Auf diese Weise kann eine unerwünschte, temperaturbedingte Änderung der Strömungsgeschwindigkeit des durch den Rohrkörper strömenden Fluids weitgehend oder sogar vollständig vermieden werden.

Besonders bevorzugt sind die Rohrkörper entlang der Erstreckungsrichtung gerade, also umlenkungs- oder krümmungsfrei, ausgebildet. Auf diese Weise können unerwünschte Druckverluste in den durch die Rohrkörper strömenden Fluiden, wie sie bei Fluidpfaden mit gekrümmter Geometrie und insbesondere bei Umlenkungen auftreten können, minimiert oder sogar vollständig vermieden werden. Der Verzicht auf solche Umlenkungen ist darüber hinaus mit nicht unerheblichen Kostenvorteilen bei der Herstellung verbunden.

In einer anderen bevorzugten Ausführungsform können die verschiedenen Erstreckungsrichtungen der einzelnen Rohrkörper parallel zu einander verlaufen. Ein Wärmetauscher mit derart zueinander angeordneten Rohrkörpern ist unter Anwendung des additiven Herstellungsverfahrens besonders einfach zu herzustellen. In einer dazu alternativen Variante können die beiden Erstreckungsrichtungen wenigstens zweier benachbarter Rohrkörper unter einem spitzen Winkel zueinander angeordnet sein. Besonders bevorzugt können alle benachbarten Rohrkörper unter einem spitzen Winkel zueinander angeordnet sein. Auf diese Weise können die Rohrkörper mit entlang ihrer Erstreckungsrichtung zu- und/oder abnehmendem Rohrquerschnitt versehen und direkt aneinander ausgeformt werden, ohne dass sich unerwünschte Zwischenräume zwischen den einzelnen Rohrkörpern ergeben oder die Rohrkörper gekrümmt ausgebildet werden müssten.

In einer anderen bevorzugten Ausführungsform kann wenigstens ein Rohrkörper wenigstens einen ersten Rohrabschnitt mit konstantem Rohrquerschnitt aufweisen, der entlang der Erstreckungsrichtung in einen zweiten Rohrabschnitt übergeht, in welchem der Rohrquerschnitt kontinuierlich zunimmt. Auf diese Weise kann der Rohrkörper an verschiedene, abschnittsweise variierende Funktionen des Rohrkörpers wie etwa Aufwärmen, Verdampfen oder Überhitzen des durch den Rohrkörper strömenden Fluids angepasst werden. Durch gezieltes Aufweiten eines Rohrkörpers bzw. Fluidkanals an einer bestimmten Stelle kann z.B. dem starken Anstieg des Druckverlustes beim Verdampfungsprozess entgegen gewirkt werden, bzw. der Verdampfungsprozess genau an dieser Stelle initiiert werden. Ebenso ist es möglich Kondensierungsvorgänge durch Querschnittsänderungen positiv zu beeinflussen.

Bevorzugt werden alle Rohrkörper des Wärmetauschers mit einer solchen Eigenschaft versehen.

In einer vorteilhaften Weiterbildung geht der zweite Rohrabschnitt wenigstens eines Rohrkörpers, vorzugsweise einer Mehrzahl von Rohrkörpern, höchst vorzugsweise aller Rohrkörper, entlang der Erstreckungsrichtung in einen dritten Rohrabschnitt mit konstantem Rohrquerschnitt über.

In einer besonders einfach herzustellenden Ausführungsform kann wenigstens ein Rohrkörper im Rohrquerschnitt die Geometrie eines Rechtecks, vorzugsweise eines Quadrats, oder eine runde, vorzugsweise eine kreisrunde, Geometrie aufweisen. Bevorzugt gilt dies für eine Mehrzahl von Rohrkörpern, besonders bevorzugt für alle Rohrkörper.

In einer anderen bevorzugten Ausführungsform weist der Wärmetauscher in einem Längsschnitt entlang der Erstreckungsrichtung eines Rohrkörpers die Geometrie eines, insbesondere gleichmäßigen, Trapezes auf. Durch Verwendung einer derartigen Geometrie kann bauraumsparend ein Wärmetauscher realisiert werden, dessen Rohrquerschnitte entlang der Erstreckungsrichtung abnehmen.

In einer besonders bevorzugten Ausführungsform ist der Wärmetauscher daher derart ausgebildet, dass eine senkrecht zur Erstreckungsrichtung eines Rohrkörpers gemessene Querschnittsfläche des Wärmetauschers entlang der Erstreckungsrichtung wenigstens abschnittsweise, insbesondere kontinuierlich, abnimmt.

Besonders zweckmäßig können die Rohrkörper als Flachrohre oder Rundrohre ausgebildet sein, die entlang einer Stapelrichtung (BE: quer zu HS-Richtung) benachbart zueinander angeordnet sind, wobei die Stapelrichtung quer zur Erstreckungsrichtung verläuft.

In einer weiteren bevorzugten Ausführungsform sind die zweiten Fluidpfade durch Zwischenräume, die zwischen wenigstens zwei benachbarten Rohrkörpern vorgesehen sind, ausgebildet. Für den Fall, dass die Rohrkörper als entlang der Stapelrichtung angeordnete Flachrohre ausgebildet sind, lässt sich somit auf einfache Weise ein Plattenwärmetauscher realisieren.

Besonders zweckmäßig weist die Einlassöffnung eines jeden Rohrkörpers einen Einlass-Öffnungsquerschnitt auf, der größer oder kleiner ist als ein Auslass- Öffnungsquerschnitt der Auslassöffnung desselben Rohrkörpers. Auf diese Weise können die Öffnungsquerschnitte der Einlass- und Auslassöffnungen der Rohrkörper an den entlang der Erstreckungsrichtung zu- oder abnehmenden Rohrquerschnitt angepasst werden.

Bei einer anderen bevorzugten Ausführungsform besitzt wenigstens ein Rohrkörper entlang der Erstreckungsrichtung wenigstens einen Rohrabschnitt, in welchem er eine kugelsegmentartige Geometrie aufweist. Die Verwendung einer solchen kugelsegment-artigen Geometrie erlaubt die erfindungswesentliche Variation des Rohrquerschnitts auf einer bezüglich der Erstreckungsrichtung geringen Distanz.

Bei einer vorteilhaften Weiterbildung kann daher eine Mehrzahl von solchen Rohrkörpern vorgesehen sein, die zur Ausbildung erster Fluidpfade benachbart und im Abstand zueinander angeordnet sind. Jeder Rohrkörper weist dabei entlang seiner Erstreckungsrichtung wenigstens zwei Rohrabschnitte, vorzugsweise eine Mehrzahl von Rohrabschnitten, mit kugelsegmentartiger Geometrie auf.

Besonders zweckmäßig können wenigstens zwei Rohrkörper, vorzugsweise alle Rohrkörper, parallel zueinander angeordnet sein. Auf diese Weise kann der Bauraumbedarf des Wärmetauschers möglichst klein gehalten werden.

Bei einer vorteilhaften Weiterbildung kann durch einen Zwischenraum zwischen den Rohrkörpern wenigstens ein zweiter Fluidpfad zum Durchströmen mit einem zweiten Fluid ausgebildet sein. In dieser Ausführungsform ist außen an den Rohrkörpern eine Rippenstruktur vorgesehen, die von den Rohrkörpern weg in den Zwischenraum hineinragt. Mittels einer solchen Rippenstruktur kann die Oberfläche der Rohrkörper, die zum Wärmeaustausch mit dem durch den Zwischenraum bzw. zweiten Fluidpfad strömende Fluid zur Verfügung steht, vergrößert werden. Dies führt zu einer verbesserten Effizienz des Wärmetauschers.

Zur verbesserten Aussteifung der Wärmetauscher kann die Rippenstruktur derart ausgebildet sein, dass durch sie wenigstens zwei benachbarte Rohrkörper miteinander verbunden sind.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: ein erstes Beispiel eines erfindungsgemäßen Wärmetauschers in grobschematischer Darstellung und in einem Längsschnitt, bei welchem sich alle Rohrkörper des Wärmetauschers entlang ihrer Erstreckungsrichtung verjüngen,
- Fig. 2: ein zweites Beispiel eines erfindungsgemäßen Wärmetauschers in einer perspektivischen Darstellung, bei welchem die einzelnen Rohrkörper jeweils aus Flachrohren gebildet und von einem gemeinsamen Gehäuse umhüllt werden,
- Fig. 3: eine Detaildarstellung eines Rohrkörpers des Wärmetauschers in einem Längsschnitt,
- Fig. 4: ein drittes Beispiel eines erfindungsgemäßen Wärmetauschers in einer perspektivischen Darstellung, bei welchem die einzelnen Rohrkörper abschnittsweise eine kugelsegmentartige Geometrie aufweisen.
- Fig. 5: eine weiterbildende Variante des Wärmetauschers der Figur 4, bei welchem von den Rohrkörpern eine Rippenstruktur absteht.

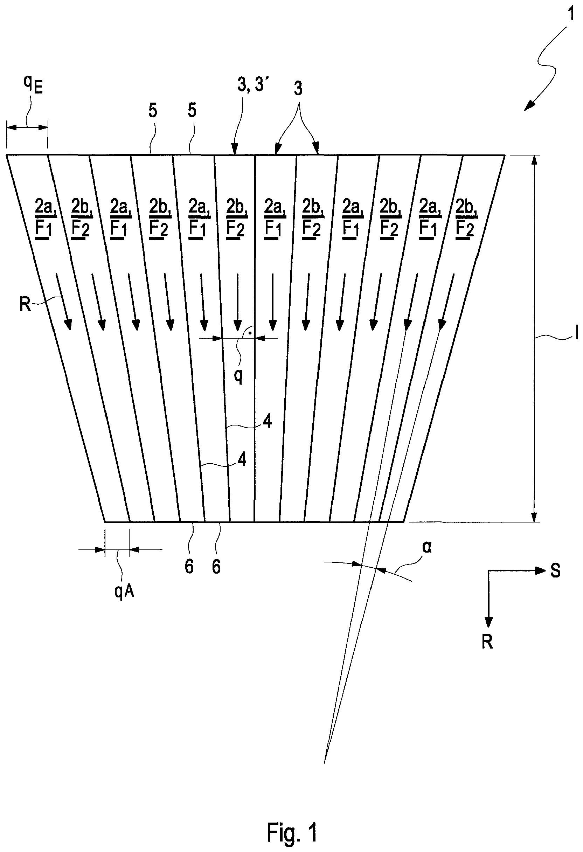

Figur 1 zeigt in grobschematischer Darstellung ein Beispiel eines Wärmetauschers 1 für ein Kraftfahrzeug. Dieser umfasst eine Mehrzahl von ersten Fluidpfaden 2a zum Durchströmen mit einem ersten Fluid F₁ und eine Mehrzahl von zweiten Fluidpfaden 2b zum Durchströmen mit einem zweiten Fluid F₂, die fluidisch von den ersten Fluidpfaden 2a getrennt und thermisch mit diesen gekoppelt sind. Die Fluidpfade 2a, 2b sind durch Rohrkörper 3 begrenzt, die mittels eines additiven Herstellungsverfahrens hergestellt sind. Vorzugsweise umfasst das additive Herstellungsverfahren Laserschmelzen. Mittels des additiven Herstellungsverfahrens können die Rohrkörper 3 des Wärmetauschers 1 direkt aus 3D-CAD-Daten hergestellt werden. Grundsätzlich werden die Komponenten des Wärmetauschers 1 beim Laserschmelzen werkzeuglos und schichtweise auf Basis des dem Wärmetauscher zugeordneten dreidimensionalen CAD-Modells gefertigt.

Entsprechend Figur 1 erstreckt sich jeder Rohrkörper 3 entlang einer Erstreckungsrichtung R. Die Rohrkörper 3 können dabei wie in Figur 1 gezeigt bezüglich der Erstreckungsrichtung R gerade, also krümmungsfrei, ausgebildet sein. In einer Variante ist aber auch eine gekrümmte Ausbildung (nicht gezeigt) denkbar. Die grobschematische Darstellung der Figur 1 zeigt den Wärmetauscher 1 in einem Längsschnitt entlang der Erstreckungsrichtung R eines Rohrkörpers 3, der zusätzlich mit dem Bezugszeichen 3' bezeichnet ist. Das heißt, die Erstreckungsrichtungen R der einzelnen Rohrkörper 3 müssen nicht notwendigerweise parallel zueinander verlaufen. Vielmehr können die Erstreckungsrichtungen R benachbarter Rohrkörper 3 wie in Figur 1 gezeigt unter einem spitzen Winkel a, beispielsweise von 20°, zueinander angeordnet sein. Besonders bevorzugt können alle benachbarten Rohrkörper 3 unter einem solchen spitzen Winkel α zueinander angeordnet sein.

In dem in Figur 1 gezeigten Längsschnitt besitzt der gesamte Wärmetauscher 1 die äußere Geometrie eines gleichmäßigen Trapezes. Durch Verwendung einer derartigen Geometrie kann bauraumsparend ein Wärmetauscher 1 mit Rohrkörpern 3 realisiert werden, dessen Rohrquerschnitte q entlang der Erstreckungsrichtung R abnehmen. Jeder Rohrkörper 3 besitzt eine Einlassöffnung 5 und eine der Einlassöffnung 5 gegenüberliegende Auslassöffnung 6. Im Beispiel der Figur 1 weisen die Einlassöffnungen 5 der Rohrkörper 3 einen Einlass-Öffnungsquerschnitt q_{E} auf, der größer ist als ein Auslass- Öffnungsquerschnitt qₐ der Auslassöffnungen 6 der Rohrkörper 3.

Die Rohrkörper 3 erstrecken sich in der Erstreckungsrichtung R jeweils über eine Rohrlänge I hinweg. Benachbarte Rohrkörper 3 sind integral aneinander ausgeformt. Das heißt, zwei benachbarte Rohrkörper 3 weisen einen gemeinsamen Kontaktabschnitt auf, der im Beispiel der Figur 1 durch eine gemeinsame Trennwand 4 zweier benachbarter Rohrkörper 3 gebildet ist. Im Beispielszenario der Figur 1 nimmt ein jeweiliger Rohrquerschnitt q der einzelnen Rohrkörper 3, der senkrecht zur Erstreckungsrichtung R gemessen wird, kontinuierlich über die gesamte Rohrlänge I hinweg ab. Auf diese Weise kann eine unerwünschte, temperaturbedingte Änderung der Strömungsgeschwindigkeit des durch den betreffenden Rohrkörper 3 strömenden Fluids F₁ bzw. F₂ vermieden werden. Außerdem können die Rohrkörper 3 mit entlang ihrer Erstreckungsrichtung R zu- oder abnehmendem Rohrquerschnitt q versehen und direkt aneinander ausgeformt werden, ohne dass sich unerwünschte Zwischenräume zwischen den einzelnen Rohrkörpern 3 ergeben würden oder die Rohrkörper 3 gekrümmt ausgebildet werden müssten. Im Beispiel der Figur 1 sind die Rohrkörper 3 entlang einer senkrecht zur Erstreckungsrichtung R des Rohrkörpers 3' verlaufenden Stapelrichtung S aufeinandergestapelt.

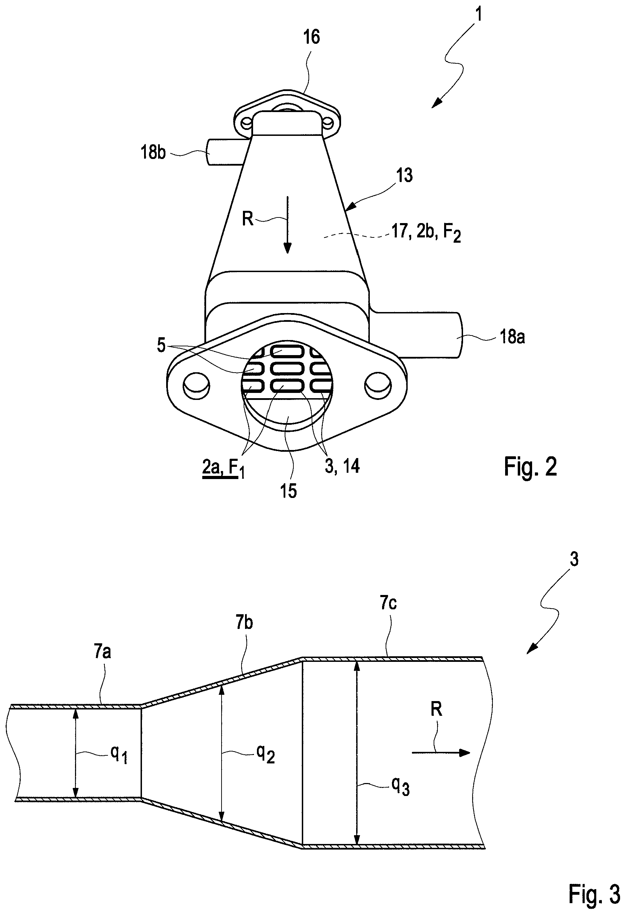

Die Figur 2 zeigt ein weiteres Beispiel eines erfindungsgemäßen Wärmetauschers 1 in einer perspektivischen Ansicht. Der Wärmetauscher 1 besitzt ein Gehäuse 13, welches ebenso wie eine Mehrzahl von in dem vom Gehäuse 13 begrenzten Gehäuseinnenraum 17 angeordneten Rohrkörpern 3 in Form von Flachrohren 14 mittels des additiven Herstellungsverfahrens hergestellt ist. Die Flachrohre 14 erstrecken sich im Wesentlichen parallel zueinander entlang einer gemeinsamen Erstreckungsrichtung R und bilden erste Fluidpfade 2a zum Durchströmen mit dem ersten Fluid F₁ aus. In einem Querschnitt senkrecht zur Erstreckungsrichtung R weisen die Flachrohre 14 eine rechteckige Geometrie auf. Durch den zu den Flachrohren 14 komplementären Bereich des Gehäuseinnenraums 17 wird ein zweiter Fluidpfad 2b zum Durchströmen mit dem zweiten Fluid F₂ gebildet.

Die einzelnen Flachrohre 14 verjüngen sich von einer jeweiligen Einlassöffnung 5 zu einer der Einlassöffnung 5 gegenüberliegenden Auslassöffnung 6 hin, was bedeutet, dass der Rohrquerschnitt der einzelnen Flachrohre 14 entlang der Erstreckungsrichtung abnimmt. Der Öffnungsquerschnitt der einzelnen Einlassöffnungen 6 ist also jeweils größer als der Öffnungsquerschnitt der einzelnen Auslassöffnungen. Wie in Figur 2 dargestellt kann im Gehäuse 13 eine gemeinsame Einlassöffnung 15 zum Einleiten und Verteilen des ersten Fluids F₁ auf die einzelnen Flachrohre 14 und eine der gemeinsamen Einlassöffnung 15 gegenüberliegende gemeinsame Auslassöffnung 16 vorgesehen sein. Das zweite Fluid F₂ kann über am Gehäuse 13 ausgeformte Rohrstutzen 18a, 18b in den zweiten Fluidpfad 2b eingeleitet und wieder aus diesem ausgleitet werden.

Die Verwendung eines additiven Herstellungsverfahrens erlaubt es, einen Wärmetauscher 1 mit beliebig variierenden Rohrquerschnitten zu konzipieren. Dies ist im Folgenden exemplarisch für einen einzigen Rohrkörper 3 in der Darstellung der Figur 3 gezeigt. Der Rohrkörper der Figur 2 besitzt einen ersten Kanalabschnitt 7a mit konstantem Rohrquerschnitt q₁, welcher entlang der Erstreckungsrichtung R in einen zweiten Rohrabschnitt 7b übergeht, in welchem der Rohrquerschnitt q₂ kontinuierlich zunimmt. Der zweite Rohrabschnitt 7b wiederum geht entlang der Erstreckungsrichtung R in einen dritten Rohrabschnitt 7c mit konstantem Rohrquerschnitt q₃ über. Durch gezieltes Aufweiten eines Rohrkörpers 3 an einer bestimmten Stelle kann z.B. dem starken Anstieg des Druckverlustes beim Verdampfungsprozess entgegen gewirkt werden, bzw. der Verdampfungsprozess genau an dieser Stelle initiiert werden. Ebenso ist es möglich Kondensierungsvorgänge durch Querschnittsänderungen positiv zu beeinflussen

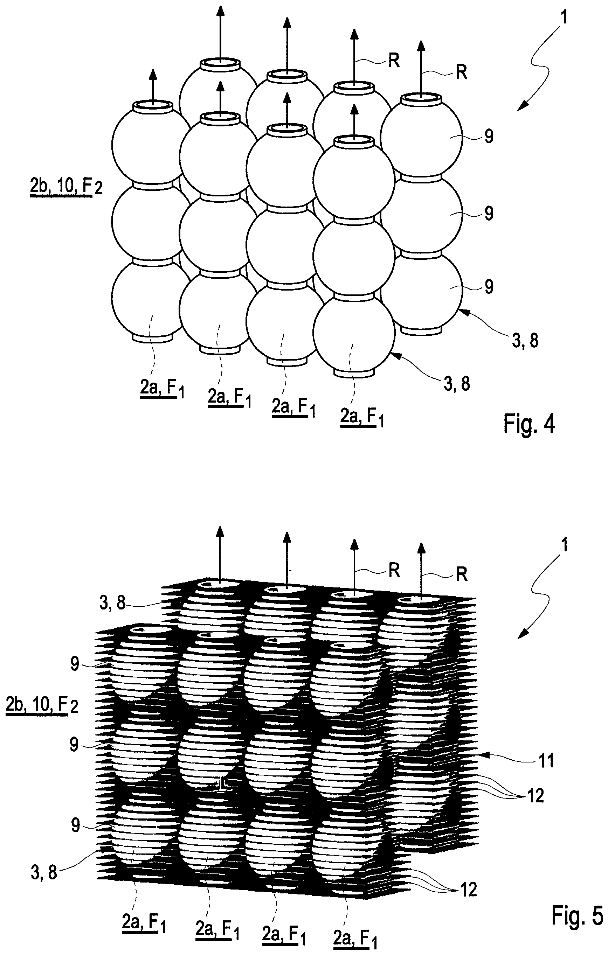

Die Figur 4 zeigt in einer perspektivischen Darstellung ein weiteres Ausführungsbeispiel eines erfindungsgemäßen Wärmetauschers 1 mit einer Mehrzahl von Rohrkörpern 3, die zur Ausbildung erster Fluidpfade 2a benachbart und im Abstand zueinander angeordnet sind. Die Rohrkörper 3 können wie in Figur 4 dargestellt als Rundrohre 8 ausgebildet und im Wesentlichen parallel zueinander angeordnet sein, so dass auch die einzelnen Erstreckungsrichtungen R der Rohrkörper 8 im Wesentlichen parallel zueinander verlaufen.

Wie Figur 4 anschaulich belegt, weisen die Rundrohre 8 entlang ihrer jeweiligen Erstreckungsrichtung R im Abstand zueinander eine Mehrzahl von Rohrabschnitten 9 mit kugelsegment- oder kugelartiger artiger Geometrie. In vereinfachten Varianten können in einzelnen Rundrohren 8 oder in jedem Rundrohr 8 auch nur zwei solche Rohrabschnitte 9 oder gar nur ein solcher Rohrabschnitt 9 vorgesehen sein (in Figur 4 nicht gezeigt). Durch einen Zwischenraum 10 zwischen den Rohrkörpern 3 wird ein zweiter Fluidpfad 2b zum Durchströmen mit einem zweiten Fluid F₂ ausgebildet.

Die Figur 5 zeigt eine Weiterbildung des Wärmetauschers 1 der Figur 4. Beim Wärmetauscher 1 der Figur 5 ist außen an den Rohrkörpern 3 eine Rippenstruktur 11 vorhanden, die von den Rohrkörpern 3 weg in den den zweiten Fluidpfad 2b ausbildenden Zwischenraum 10 hineinragt. Die Rippenstrukturen 11 dienen dazu, die thermische Wechselwirkungsfläche der Rohrwände der Rohrkörper 3 zu vergrößern, wodurch in dem Wärmetauscher 1 eine erhebliche Effizienzverbesserung erzielt werden kann. Die Rippenstruktur 11 umfasst eine Mehrzahl von plattenartig ausgebildeten Rippen 12. Die einzelnen Rippen 12 sind entlang der Erstreckungsrichtung R der Rohrkörper 3 im Abstand zueinander und jeweils in einer Ebene senkrecht zur Erstreckungsrichtung R angeordnet sind und stehen nach außen, in den Zwischenraum 10 hinein, von den Rohrkörpern 3 ab.

Wie in Figur 5 angedeutet, können durch die Rippenstruktur 11 wenigstens zweier benachbarte Rohrkörper 3 miteinander verbunden sein. Auf diese Weise kann eine verbesserte Aussteifung des Wärmetauschers 1 erzielt werden.

Der Wärmetauscher 1 kann einstückig ausgebildet sein. Eine solche, einstückige Ausbildung bildet sich insbesondere bei Verwendung des vorangehend vorgestellten additiven Herstellungsverfahrens, insbesondere des Laserschmelzens, an. Bei einer einstückigen Ausbildung des Wärmetauschers 1 entfällt das sehr aufwändige und somit kostenintensive Befestigen der einzelnen Komponenten des Wärmetauschers aneinander. Es versteht sich, dass im Falle einer einstückigen Ausbildung des Wärmetauschers 1, die vorliegend verwendeten Bezeichnungen wie z.B. "Rohrkörper" gültig bleiben.

## Patentansprüche

1. Wärmetauscher (1), insbesondere für ein Kraftfahrzeug,
- mit einer Mehrzahl von ersten Fluidpfaden (2a) zum Durchströmen mit einem ersten Fluid (F₁) und einer Mehrzahl von zweiten Fluidpfaden (2b) zum Durchströmen mit einem zweiten Fluid (F₂), die fluidisch von den ersten Fluidpfaden (2a) getrennt und thermisch mit diesen gekoppelt sind,
- wobei die Fluidpfade (2a, 2b) durch Rohrkörper (3) begrenzt sind, die mittels eines additiven Herstellungsverfahrens hergestellt sind,
- wobei ein senkrecht zur Erstreckungsrichtung (R) gemessener Rohrquerschnitt (q) wenigstens eines Rohrkörpers (3) wenigstens abschnittsweise entlang der Erstreckungsrichtung (R) zunimmt und/oder abnimmt,
**dadurch gekennzeichnet, dass**
- sich die Rohrkörper (3) in der Erstreckungsrichtung (R) jeweils über eine vorbestimmte Rohrlänge (I) hinweg erstrecken,
- der Rohrquerschnitt (q) wenigstens eines Rohrkörpers (3) kontinuierlich über die gesamte Rohrlänge (I) hinweg zu- oder abnimmt.

2. Wärmetauscher nach Anspruch 1,
**dadurch gekennzeichnet, dass**
- das additive Herstellungsverfahren Laserschmelzen umfasst, und/oder dass
- der Wärmetauscher einstückig ausgebildet ist.

3. Wärmetauscher nach Anspruch 1 oder 2,
**dadurch gekennzeichnet, dass**
benachbarte Rohrkörper (3) integral aneinander ausgeformt sind und einen gemeinsamen Kontaktabschnitt aufweisen.

4. Wärmetauscher nach einem der Ansprüche 1 bis 3,
**dadurch gekennzeichnet, dass**
die Rohrkörper (3) entlang der Erstreckungsrichtung (R) gerade, also krümmungsfrei, ausgebildet sind.

5. Wärmetauscher nach einem der vorhergehenden Ansprüche,
**dadurch gekennzeichnet, dass**
- die Erstreckungsrichtungen (R) der einzelnen Rohrkörper (3) parallel zu einander verlaufen, oder dass
- die Erstreckungsrichtungen (R) wenigstens zweier benachbarter Rohrkörper (3), vorzugsweise aller Rohrkörper (3), unter einem spitzen Winkel (a) zueinander angeordnet sind.

6. Wärmetauscher nach einem der vorhergehenden Ansprüche,
**dadurch gekennzeichnet, dass**
wenigstens ein Rohrkörper (3), vorzugsweise eine Mehrzahl von Rohrkörpern (3), höchst vorzugsweise alle Rohrkörper (3), wenigstens einen ersten Rohrabschnitt (7a) mit konstantem Rohrquerschnitt (q₁) aufweist, der entlang der Erstreckungsrichtung (R) in einen zweiten Rohrabschnitt (7b) übergeht, in welchem der Rohrquerschnitt (q₂) kontinuierlich zunimmt.

7. Wärmetauscher nach Anspruch 6,
**dadurch gekennzeichnet, dass**
der zweite Rohrabschnitt (7b) wenigstens eines Rohrkörpers (3), vorzugsweise eine Mehrzahl von Rohrkörpern (3), höchst vorzugsweise aller Rohrkörper (3), entlang der Erstreckungsrichtung (R) in einen dritten Rohrabschnitt (7c) mit konstantem Rohrquerschnitt (q₃) übergeht.

8. Wärmetauscher nach einem der vorhergehenden Ansprüche,
**dadurch gekennzeichnet, dass**
wenigstens ein Rohrkörper (3), vorzugsweise alle Rohrkörper (3), im Rohrquerschnitt (q) die Geometrie einer Rechtecks, vorzugsweise eines Quadrats, oder eine runde, vorzugsweise eine kreisrunde, Geometrie aufweist/aufweisen.

9. Wärmetauscher nach einem der vorhergehenden Ansprüche,
**dadurch gekennzeichnet, dass**
der Wärmetauscher (1) in einem Längsschnitt entlang der Erstreckungsrichtung (R) eines Rohrkörpers (3) die Geometrie eines, insbesondere gleichmäßigen, Trapezes aufweist.

10. Wärmetauscher nach einem der vorhergehenden Ansprüche,
**dadurch gekennzeichnet, dass**
eine senkrecht zur Erstreckungsrichtung (R) eines Rohrkörpers (3) gemessene Querschnittsfläche des Wärmetauschers (1) entlang der Erstreckungsrichtung (R) wenigstens abschnittsweise, insbesondere kontinuierlich, abnimmt.

11. Wärmetauscher nach einem der vorhergehenden Ansprüche,
**dadurch gekennzeichnet, dass**
die Rohrkörper (3) als Flachrohre (14) oder Rundrohre ausgebildet sind, die entlang einer Stapelrichtung (S) benachbart zueinander angeordnet sind.

12. Wärmetauscher nach einem der vorhergehenden Ansprüche,
**dadurch gekennzeichnet, dass**
wenigstens ein Rohrkörper (3) entlang der Erstreckungsrichtung (R) wenigstens einen Rohrabschnitt (9) besitzt, in welchem er eine kugelsegmentartige Geometrie aufweist.

13. Wärmetauscher nach Anspruch 12,
**dadurch gekennzeichnet, dass**
- eine Mehrzahl von Rohrkörpern (3) vorhanden ist, die zur Ausbildung erster Fluidpfade (2a) benachbart und im Abstand zueinander angeordnet sind,
- wobei jeder Rohrkörper (3) entlang seiner Erstreckungsrichtung (R) wenigstens zwei Rohrabschnitte, vorzugsweise eine Mehrzahl von Rohrabschnitten, mit kugelsegmentartiger Geometrie aufweist.

14. Wärmetauscher nach Anspruch 12 oder 13,
**dadurch gekennzeichnet, dass**
die Rohrkörper (3) im Wesentlichen parallel zueinander angeordnet sind.

15. Wärmetauscher nach Anspruch 13 oder 14,
**dadurch gekennzeichnet, dass**
- durch einen Zwischenraum (10) zwischen den Rohrkörpern (3) wenigstens ein zweiter Fluidpfad (2b) zum Durchströmen mit einem zweiten Fluid (F₂) ausgebildet ist,
- außen an den Rohrkörpern (3) eine Rippenstruktur (11) vorgesehen ist, die von den Rohrkörpern (3) weg in den Zwischenraum (11) hineinragt.

16. Wärmetauscher nach Anspruch 15,
**dadurch gekennzeichnet, dass**
durch die Rippenstruktur (11) wenigstens zwei benachbarte Rohrkörper (3) miteinander verbunden sind.

17. Wärmetauscher nach Anspruch 15 oder 16,
**dadurch gekennzeichnet, dass**
die Rippenstruktur (11) eine Mehrzahl von plattenartig ausgebildeten Rippen (12) umfasst, die jeweils in einer Ebene senkrecht zur Erstreckungsrichtung (R) angeordnet sind und von den Rohrkörpern (3) abstehen.

## Claims

1. Heat exchanger (1), in particular for a motor vehicle,
- with a plurality of first fluid paths (2a) for throughflow with a first fluid (F₁) and a plurality of second fluid paths (2b) for throughflow with a second fluid (F₂) which are fluidly separated from the first fluid paths (2a) and thermally coupled with same,
- wherein the fluid paths (2a, 2b) are delimited by pipe bodies (3), which are manufactured by means of an additive manufacturing method,
- wherein a pipe cross-section (q) of at least one pipe body (3), measured perpendicularly to the extension direction (R), increases and/or decreases at least sectionally along the extension direction (R),
**characterised in that**
- the pipe bodies (3) extend in the extension direction (R) each for a predetermined pipe length (I),
- the pipe cross-section (q) of at least one pipe body (3) increases or decreases continually throughout the entire pipe length (I).

2. Heat exchanger according to claim 1,
**characterised in that**
- the additive manufacturing method comprises laser melting, and/or that
- the heat exchanger is formed as one piece.

3. Heat exchanger according to claim 1 or 2,
**characterised in that**
adjacent pipe bodies (3) are formed integrally together and have a shared contact section.

4. Heat exchanger according to claim 1 to 3,
**characterised in that**
the pipe bodies (3) are formed along the extension direction (R) straight, i.e. without a bend.

5. Heat exchanger according to one of the preceding claims,
**characterised in that**
- the extension directions (R) of the individual pipe bodies (3) extend parallel to one another, or that
- the extension directions (R) of at least two adjacent pipe bodies (3), preferably of all pipe bodies (3) are disposed at an acute angle (a) to one another.

6. Heat exchanger according to one of the preceding claims,
**characterised in that**
at least one pipe body (3), preferably a plurality of pipe bodies (3), most preferably all pipe bodies (3), has at least one first pipe section (7a) with constant pipe cross-section (q₁), which passes along the extension direction (R) into a second pipe section (7b), in which the pipe cross-section (q₂) increases continuously.

7. Heat exchanger according to claim 6,
**characterised in that**
the second pipe section (7b) of the least one pipe body (3), preferably a plurality of pipe bodies (3), most preferably all pipe bodies (3), passes along the extension direction (R) into a third pipe section (7c) with constant pipe cross-section (q₃).

8. Heat exchanger according to one of the preceding claims,
**characterised in that**
at least one pipe body (3), preferably all pipe bodies (3) has/have in pipe cross-section (q) the geometry of a rectangle, preferably of a square, or a round, preferably a circular geometry.

9. Heat exchanger according to one of the preceding claims,
**characterised in that**
the heat exchanger (1) has in a longitudinal section along the extension direction (R) of a pipe body (3) the geometry of an, in particular regular, trapezium.

10. Heat exchanger according to one of the preceding claims,
**characterised in that**
a cross-section surface, measured perpendicularly to the extension direction (R) of a pipe body (3), of the heat exchanger (1) decreases along the extension direction (R) at least sectionally, in particular continuously.

11. Heat exchanger according to one of the preceding claims,
**characterised in that**
the pipe bodies (3) are formed as flat pipes (14) or round pipes, which are disposed along a stack direction (S) adjacent to one another.

12. Heat exchanger according to one of the preceding claims,
**characterised in that**
at least one pipe body (3) has along the extension direction (R) at least one pipe section (9) in which it has a spherical segment shaped geometry.

13. Heat exchanger according to claim 12,
**characterised in that**
- a plurality of pipe bodies (3) is present, which for the formation of first fluid paths (2a) are disposed adjacent and spaced to one another,
- wherein each pipe body (3) along its extension direction (R) has at least two pipe sections, preferably a plurality of pipe sections with spherical segment shaped geometry.

14. Heat exchanger according to claim 12 or 13,
**characterised in that**
the pipe bodies (3) are disposed substantially parallel to one another.

15. Heat exchanger according to claim 13 or 14,
**characterised in that**
- at least one second fluid path (2b) is formed by an interspace (10) between the pipe bodies (3) for the throughflow of a second fluid (F₂),
- a rib structure (11) is provided on the exterior of the pipe bodies (3), which protrudes from the pipe bodies (3) into the interspace (11).

16. Heat exchanger according to claim 15,
**characterised in that**
by means of the rib structure (11) at least two adjacent pipe bodies (3) are connected with one another.

17. Heat exchanger according to claim 15 or 16,
**characterised in that**
the rib structure (11) comprises a plurality of plate-like formed ribs (12) which are disposed respectively on one level perpendicularly to the extension direction (R) and protrude from the pipe bodies (3).

## Revendications

1. Échangeur de chaleur (1), en particulier pour un véhicule automobile,
- avec une pluralité de premiers trajets de fluide (2a) pour le passage avec un premier fluide (F₁) et une pluralité de deuxièmes trajets de fluide (2b) pour le passage avec un deuxième fluide (F₂), qui sont séparés fluidiquement des premiers trajets de fluide (2a) et couplés thermiquement avec ceux-ci,
- dans lequel les trajets de fluide (2a, 2b) sont limités par des corps tubulaires (3), qui sont fabriqués au moyen d'un procédé de fabrication additif,
- dans lequel une section transversale de tube (q) mesurée perpendiculairement à la direction d'extension (R) d'au moins un corps tubulaire (3) augmente et/ou diminue au moins par section le long de la direction d'extension (R),
**caractérisé en ce que**
- les corps tubulaires (3) s'étendent dans la direction d'extension (R) respectivement sur une longueur de tube (I) prédéfinie,
- la section transversale de tube (q) d'au moins un corps tubulaire (3) augmente ou diminue en continue sur toute la longueur de tube (I).

2. Échangeur de chaleur selon la revendication 1,
**caractérisé en ce que**
- le procédé de fabrication additif comprend la fusion laser, et/ou **en ce que**
- l'échangeur de chaleur est réalisé d'un seul tenant.

3. Échangeur de chaleur selon la revendication 1 ou 2,
**caractérisé en ce que**
des corps tubulaires (3) adjacents sont réalisés d'un seul tenant l'un contre l'autre et présentent une section de contact commune.

4. Échangeur de chaleur selon l'une quelconque des revendications 1 à 3,
**caractérisé en ce que**
les corps tubulaires (3) sont réalisés le long de la direction d'extension (R) de manière rectiligne, donc sans courbure.

5. Échangeur de chaleur selon l'une quelconque des revendications précédentes,
**caractérisé en ce que**
- les directions d'extension (R) des corps tubulaires (3) individuels s'étendent parallèlement l'une à l'autre, ou que
- les directions d'extension (R) d'au moins deux corps tubulaires (3) adjacents, de préférence de tous les corps tubulaires (3), sont agencées l'une par rapport à l'autre selon un angle aigu (α).

6. Échangeur de chaleur selon l'une quelconque des revendications précédentes,
**caractérisé en ce que**
au moins un corps tubulaire (3), de préférence une pluralité de corps tubulaires (3), au maximum de préférence tous les corps tubulaires (3), présente au moins une première section tubulaire (7a) avec section transversale de tube constante (q₁), qui se transforme le long de la direction d'extension (R) en une deuxième section tubulaire (7b), dans laquelle la section transversale de tube (q₂) augmente en continu.

7. Échangeur de chaleur selon la revendication 6,
**caractérisé en ce que**
la deuxième section tubulaire (7b) d'au moins un corps tubulaire (3), de préférence une pluralité de corps tubulaires (3), au maximum de préférence tous les corps tubulaires (3), se transforme le long de la direction d'extension (R) en une troisième section tubulaire (7c) avec la section transversale de tube constante (q₃).

8. Échangeur de chaleur selon l'une quelconque des revendications précédentes,
**caractérisé en ce que**
au moins un corps tubulaire (3), de préférence tous les corps tubulaires (3), présente/présentent dans la section transversale de tube (q) la géométrie d'un rectangle, de préférence d'un carré, ou une géométrie ronde, de préférence une géométrie circulaire.

9. Échangeur de chaleur selon l'une quelconque des revendications précédentes,
**caractérisé en ce que**
l'échangeur de chaleur (1) présente dans une section longitudinale le long de la direction d'extension (R) d'un corps tubulaire (3) la géométrie, d'un trapèze, en particulier régulier.

10. Échangeur de chaleur selon l'une quelconque des revendications précédentes,
**caractérisé en ce que**
une section transversale de l'échangeur de chaleur (1) mesurée perpendiculairement à la direction d'extension (R) d'un corps tubulaire (3) diminue le long de la direction d'extension (R) au moins par section, en particulier de manière continue.

11. Échangeur de chaleur selon l'une quelconque des revendications précédentes,
**caractérisé en ce que**
les corps tubulaires (3) sont réalisés en tant que tubes plats (14) ou tubes ronds, qui sont agencés de manière adjacente l'un à l'autre le long d'une direction d'empilement (S).

12. Échangeur de chaleur selon l'une quelconque des revendications précédentes,
**caractérisé en ce que**
au moins un corps tubulaire (3) dispose le long de la direction d'extension (R) au moins une section tubulaire (9), dans laquelle il présente une géométrie de type segment sphérique.

13. Échangeur de chaleur selon la revendication 12,
**caractérisé en ce que**
- une pluralité de corps tubulaires (3) est présente, qui sont agencés pour la réalisation de premiers trajets de fluide (2a) de manière adjacente et à distance l'un de l'autre,
- dans lequel chaque corps tubulaire (3) présente le long de sa direction d'extension (R), au moins deux sections tubulaires, de préférence une pluralité de sections tubulaires, avec géométrie de type segment sphérique.

14. Échangeur de chaleur selon la revendication 12 ou 13,
**caractérisé en ce que**
les corps tubulaires (3) sont agencés de manière sensiblement parallèle l'un à l'autre.

15. Échangeur de chaleur selon la revendication 13 ou 14,
**caractérisé en ce que**
- au moins un deuxième trajet de fluide (2b) pour le passage avec un deuxième fluide (F₂) est réalisé par un espace intermédiaire (10) entre les corps tubulaires (3),
- une structure de nervure (11), qui pénètre dans l'espace intermédiaire (11) en s'éloignant des corps tubulaires (3), est prévue à l'extérieur sur les corps tubulaires (3).

16. Échangeur de chaleur selon la revendication 15,
**caractérisé en ce que**
au moins deux corps tubulaires (3) adjacents sont reliés l'un à l'autre par la structure de nervure (11).

17. Échangeur de chaleur selon la revendication 15 ou 16,
**caractérisé en ce que**
la structure de nervure (11) comprend une pluralité de nervures (12) réalisées de type plaque, qui sont agencées respectivement dans un plan perpendiculairement à la direction d'extension (R) et sont éloignés des corps tubulaires (3).
